# DEMANDE DE BREVET EUROPEEN

(11) **EP 1 726 484 A1**
(43) Date de publication de la demande: **29.11.2006**
(21) Numéro de dépôt: 06300528.4
(22) Date de dépôt: 29.05.2006
(51) Int. Cl.: B60R 7/00

(54) **Crochet de maintien d'un élément**

(30) Priorité: 25.05.2005 FR 0551375; 05.09.2005 FR 0552677
(71) Demandeur: Renault SAS, 92100 Boulogne Billancourt (FR)
(72) Inventeur: Legrand, Jean-Pierre, 28300, BERCHERES SAINT GERMAIN (FR)

(57) **Abrégé**

L'invention concerne un crochet (12) de maintien d'un élément comprenant une partie fixe (14), et une partie mobile (16) en rotation autour d'un axe de liaison de direction transversale (36) des deux parties permettant le passage d'une position d'utilisation dans laquelle les deux parties (14, 16) sont sensiblement parallèles à une position de libération de charge dans laquelle les deux parties (14, 16) s'étendent selon une même direction longitudinale, caractérisé en ce que l'axe de rotation (36) est formé par une amorce de pliure entre les deux parties (14, 16).

## Description

L'invention concerne un crochet pour le maintien d'un élément dans un véhicule automobile. Plus particulièrement, ce crochet est destiné à une utilisation dans une zone de chargement dudit véhicule.

Souvent, les petits bagages et, en particulier, les sacs de commissions sont disposés à l'intérieur d'un véhicule sur les sièges ou sur le plancher, ou éventuellement sur la plage arrière. Les plus gros et plus lourds bagages sont disposés dans la zone de chargement du véhicule, autrement appelé le coffre à bagages. Cependant, durant un trajet, tous ces bagages peuvent se déplacer librement et se renverser par exemple, lors d'un virage car ils ne sont pas retenus ou maintenus en place. Ceci est déplaisant pour l'utilisateur du véhicule, particulièrement dans le cas de sacs de commissions pleins dans lesquels les petits objets se renversent souvent à l'extérieur des sacs. Afin d'éviter les inconvénients mentionnés ci-dessus, les zones de chargement de véhicule automobile sont munis de crochets de maintien de sacs vissés ou clipsés sur la garniture ou éventuellement démoulés sur cette dernière.

A titre illustratif, la publication WO 97/48575 propose un crochet clipsé sur la garniture de la zone de chargement à une hauteur définie. Cependant, ce type de crochet fixe ne permet pas de gérer les différentes tailles de sacs. De plus, le risque de le heurter lors d'un chargement d'objets encombrants est important. Enfin, les utilisateurs peuvent être incité à accrocher des objets lourds, ce qui oblige les concepteurs à renforcer la garniture en ajoutant un vissage sur la tôle du véhicule.

En outre, il existe aussi des crochets se trouvant au bout d'une sangle fixée sur les parois d'une zone de chargement. La sangle est fixée sur une zone d'accueil haute suffisamment raide comme sous les tablettes centrales ou latérales pour permettre l'accrochage de sacs de taille importante comme des sacs de sport ou des sacs d'école. Cependant, cette position haute du crochet n'est pas adaptée pour le maintien de sacs de commissions car ces derniers se balanceraient dans la zone de chargement lors d'un trajet. Cependant, même si ce moyen de fixation de la sangle 14 à une paroi de fixation est plus résistant, il ne peut pas supporter tout type de charges. Le risque étant qu'une charge trop importante pourrait détériorer de manière significative la paroi de la zone de chargement. Afin d'éviter cet inconvénient, l'invention prévoit l'utilisation d'un crochet apte à gérer une charge lourde afin d'éviter toute détérioration. Pour cela, la publication GB 2 396 655 propose un crochet en deux parties : une partie fixe supportée par une paroi de l'habitacle et une partie mobile en rotation entre une position d'utilisation et une position de libération de charge quand celle-ci dépasse un seuil critique prédéfini. Cependant, ce crochet est complexe puisque qu'il nécessite le moulage de deux pièces puis leur assemblage par un opérateur.

L'invention vise à pallier ces inconvénients en proposant un dispositif de maintien de sacs amélioré qui puisse gérer en même temps la hauteur du crochet et qui prévoit un moyen pour ne pas détériorer l'habitacle en cas de charge lourde.

A ce titre, l'invention fournit un crochet de maintien d'un élément comprenant une partie fixe, et une partie mobile en rotation autour d'un axe de liaison transversal des deux parties permettant le passage d'une position d'utilisation dans laquelle les deux parties sont sensiblement parallèles à une position de libération de charge dans laquelle les deux parties s'étendent selon une même direction longitudinale, caractérisé en ce que l'axe de rotation est formé par une amorce de pliure entre les deux parties.

Selon une caractéristique de l'invention, le crochet est relié à la structure du véhicule par un élément de retenue de longueur réglable.

Avantageusement, la longueur de l'élément de retenue se règle automatiquement en fonction de la masse de l'élément.

Selon une autre caractéristique de l'invention, il comprend, en outre, un moyen de maintien du crochet en position d'utilisation qui est une languette d'accrochage s'engageant dans un évidemment présent sur la partie fixe lorsque le crochet est en position d'utilisation.

Selon une autre caractéristique de l'invention, le moyen de maintien est l'élément de retenue.

Avantageusement, l'extrémité libre de l'élément de retenue traverse, selon une direction orthogonale au plan formé par les directions longitudinale et transversale, la partie fixe et est connecté à la partie mobile.

Selon l'un des modes de réalisation de l'invention, la masse de l'élément limite le maintien par l'élément de retenue ou par la languette d'accrochage de la partie mobile dans sa position d'utilisation.

D'autres caractéristiques et avantages de l'invention apparaîtront clairement à la lecture de la description suivante de deux modes de réalisation non limitatifs de celle-ci, en liaison avec les dessins annexés sur lesquels :
- la figure 1 représente une vue en perspective d'un crochet selon l'invention au bout d'une sangle selon un premier mode de réalisation,
- la figure 2 représente une section du crochet selon l'invention au bout d'une sangle dans la position d'utilisation et dans la position de libération de charge selon le premier mode de réalisation,
- la figure 3 représente une vue en perspective d'un crochet selon l'invention au bout d'une sangle selon un deuxième mode de réalisation, et
- la figure 4 représente une section du crochet selon l'invention au bout d'une sangle dans la position d'utilisation et dans la position de libération de charge selon le deuxième mode de réalisation.

Le dispositif de maintien selon l'invention est destiné à se fixer dans une zone de chargement de véhicule. Plus précisément, il se trouve à l'extrémité d'une sangle élastique 20, l'autre extrémité étant fixée sur une paroi de la zone de chargement et par exemple directement sur la caisse du véhicule ou sous un élément d'habillage tel que celui de la tablette latérale dans le cas où le dispositif de maintien est placé latéralement dans la zone de chargement.

Le crochet 12, proposé dans la présente invention est destiné à recevoir des sacs comportant des poignées de transport.

Le crochet 12 selon l'un des deux modes de réalisation est réalisé en deux parties 14 et 16, l'une fixe et l'autre mobile en rotation, autour d'un axe transversal 36 formant une amorce de pliure, entre une position d'utilisation dans laquelle les deux parties sont sensiblement parallèles à une position de libération de charge dans laquelle les deux parties s'étendent selon une même direction longitudinale. II est réalisé par moulage en une seule pièce et la partie 16 est mobile par rapport à la partie 14 grâce à une charnière d'axe 36 formant la liaison entre les deux pièces.

En position d'utilisation, le crochet 12 présente une partie supérieure en forme de U et une partie inférieure où les deux parties 14 et 16 sont parallèles et jointes par un moyen de maintien 22 du crochet 12 en position d'utilisation qui sera explicité plus tard dans la description. La partie centrale de la partie supérieure forme un logement 18 pour l'accrochage de sacs avec des poignées de transport de diamètre compatible avec la largeur du logement 18.

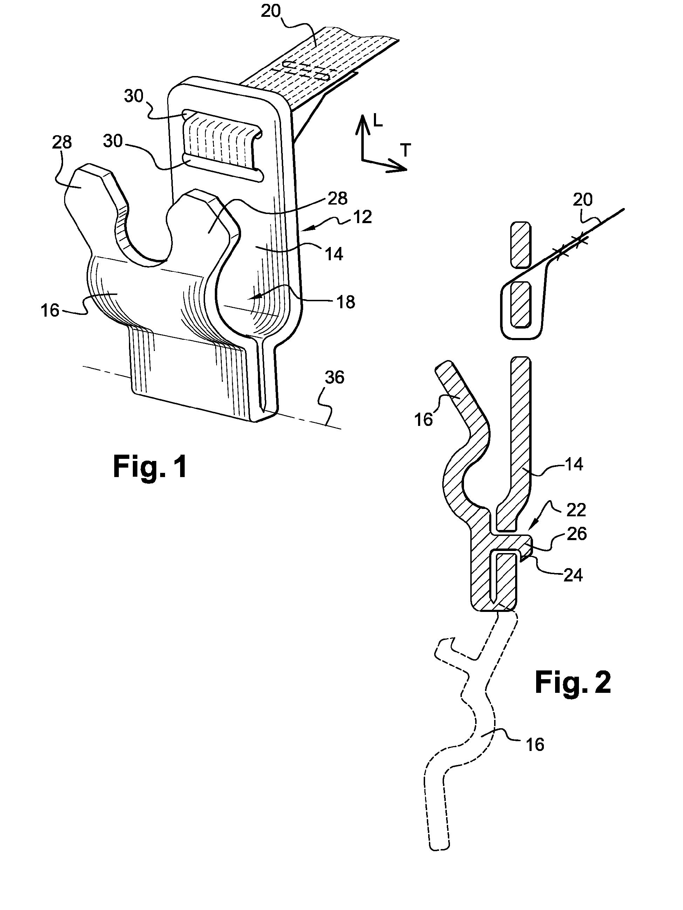

Selon le premier mode de réalisation illustré sur la figure 1 , la première partie 14 est une partie fixe du crochet 12. Elle comprend, dans sa partie supérieure deux fentes parallèles 30 aptes à recevoir une sangle 20 pour solidariser la zone de chargement et le crochet 12. De préférence, la sangle 20 est élastique pour lui conférer une longueur réglable, ce qui permet de gérer différentes tailles de sacs afin d'éviter leur renversement quand ils reposent sur le plancher de la zone de chargement. La partie inférieure de la partie fixe 14 ou de la partie mobile 16 présente un évidemment 24 apte à recevoir une languette d'accrochage 26 respectivement de la partie mobile 16 ou de la partie fixe 14.La languette 26 présente un cran 27 apte à bloquer cette dernière dans l'évidemment 24.

La deuxième partie 16 est une partie mobile du crochet 12. Elle comprend, dans sa partie supérieure, au moins deux becs d'accrochage 28 aptes à retenir au moins deux sacs de commissions par leurs poignées de transport.

Le mérite de l'invention, et plus particulièrement de ce mode de réalisation, repose sur le fait que le passage de la position d'utilisation à la position de libération de charge s'opère lorsque les sacs accrochés sur le crochet dépassent un certain seuil de charge critique prédéterminé de façon à ne pas détériorer la zone de fixation de la sangle 20 sur la structure du véhicule. Ainsi, le cran de languette d'accrochage 26 de la partie mobile 16 se désengage de l'évidemment 24 présent sur la partie fixe 14 du crochet 12 comme l'illustre la figure 2. Les deux parties 14 et 16 du crochet 12 s'étendent alors selon une même direction longitudinale. Pour réutiliser le crochet, l'utilisateur n'aura qu'à faire pivoter la partie mobile 16 du crochet 12 de manière à repositionner ladite partie 16 en position d'utilisation.

Selon le deuxième mode de réalisation, la première partie 14 est une partie fixe du crochet 12. Elle comprend, dans sa partie supérieure une fente 30 apte à recevoir la sangle 20 pour solidariser la zone de chargement et le crochet 12. Cette sangle 20 traverse le crochet 12 selon une direction orthogonale au plan formé par les directions transversale et longitudinale et s'engage dans une première fente 32 présente sur la partie mobile 16 du crochet 12 puis s'engage de l'extérieur vers l'intérieur du crochet 12 dans la seconde fente 34 de la partie mobile 16 parallèle à la première et enfin dans l'unique fente de la partie fixe 14. Le crochet est ainsi traversé de part en part par la sangle 20. Dans ce mode de réalisation, le moyen de maintien 22 est la sangle 20, contrairement au premier mode de réalisation où il s'agissait de la languette d'accrochage 26.

La deuxième partie 16 est une partie mobile du crochet 12. Elle comprend, dans sa partie supérieure, au moins deux becs d'accrochage 28 aptes à retenir au moins deux sacs de commissions par leurs poignées de transport.

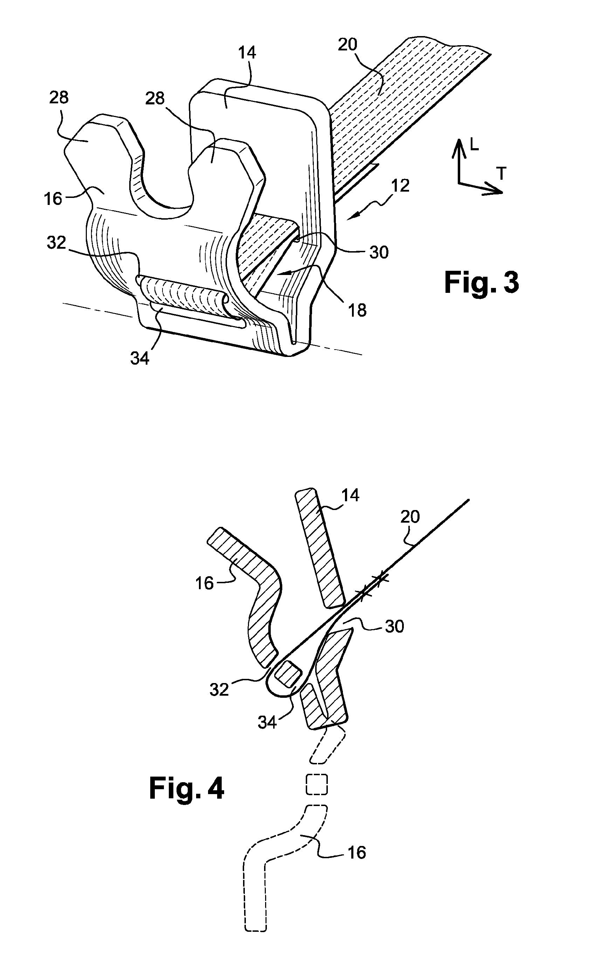

Le mérite de l'invention, et plus particulièrement de ce mode de réalisation, repose sur le fait que l'élasticité de sangle est le paramètre régissant le passage de la position d'utilisation à la position de libération de charge dans ce mode de réalisation. Ainsi, plus l'élasticité est faible, plus le crochet supportera des sacs de poids important. Comme l'illustre la figure 4, en position de libération de la charge, les deux parties 14 et 16 du crochet 12 s'étendent alors selon une même direction longitudinale. Pour réutiliser le crochet, l'utilisateur n'aura qu'à faire pivoter la partie mobile 16 autour de l'axe de rotation 36 du crochet 12 de manière à repositionner ladite partie 16 en position d'utilisation.

## Revendications

1. Crochet (12) de maintien d'un élément comprenant :
- une partie fixe (14), et
- une partie mobile (16) en rotation autour d'un axe de liaison de direction transversale (36) des deux parties permettant le passage d'une position d'utilisation dans laquelle les deux parties (14, 16) sont sensiblement parallèles à une position de libération de charge dans laquelle les deux parties (14, 16) s'étendent selon une même direction longitudinale,
**caractérisé en ce que** l'axe de rotation (36) est formé par une amorce de pliure entre les deux parties (14, 16).

2. Crochet selon la revendication 1, **caractérisé en ce que** le crochet (12) est relié à la structure du véhicule par un élément de retenue (20) de longueur réglable.

3. Crochet selon la revendication 2, **caractérisé en ce que** la longueur de l'élément de retenue (20) se règle automatiquement en fonction de la masse de l'élément.

4. Crochet selon l'une des revendications précédentes,
**caractérisé en ce qu'**il comprend, en outre, un moyen de maintien (22) du crochet (12) en position d'utilisation.

5. Crochet selon la revendication 4, **caractérisé en ce que** le moyen de maintien (22) est une languette d'accrochage (26) s'engageant dans un évidemment (24) présent sur la partie fixe (14) lorsque le crochet (12) est en position d'utilisation.

6. Crochet selon la revendication 4, **caractérisé en ce que** le moyen de maintien (22) est l'élément de retenue (20).

7. Crochet selon la revendication 6, **caractérisé en ce que** l'extrémité libre de l'élément de retenue (20) traverse, selon une direction orthogonale au plan formé par les directions longitudinale et transversale, la partie fixe (14) et est connecté à la partie mobile (16) pour assurer la fonction de moyen de maintien (22).

8. Crochet selon l'une des revendications précédentes,
**caractérisé en ce que** la masse de l'élément limite le maintien par l'élément de retenue (20) ou par la languette d'accrochage (26) de la partie mobile (16) dans sa position d'utilisation.
